# EUROPÄISCHE PATENTANMELDUNG

(11) **EP 2 317 741 A2**
(43) Veröffentlichungstag der Anmeldung: **04.05.2011**
(21) Anmeldenummer: 10006658.8
(22) Anmeldetag: 27.06.2010
(51) Int. Cl.: H04M 1/65

(54) **Koordinierungsvorrichtung von Medieninhalten**

(30) Priorität: 29.04.2010 DE 202010006219 U; 17.12.2009 DE 202009017040 U; 31.10.2009 DE 202009014731 U; 14.12.2009 DE 202009018907 U
(71) Anmelder: Telio AG, 22765 Hamburg (DE); Schwembauer, Thomas, 84489 Burghausen (DE)
(72) Erfinder: Schwembauer, Thomas, 84489 Burghausen (DE); Fuchs, Heiko, 22765 Hamburg (DE)

(57) **Zusammenfassung**

Die Erfindung betrifft eine Vorrichtung zum Speichern und Wiedergeben von mehr als einer Sprachdatei, umfassend: mindestens ein Modul, mit dessen Hilfe Medieninhalte kontinuierlich empfangenden werden können, sowie mindestens eine Wiedergabevorrichtung zur Wiedergabe von diesen kontinuierlich empfangenen Medieninhalten mindestens ein Modul, mit dessen Hilfe per Fernkommunikation übermittelte Sprachdateien empfangenden werden können, sowie mindestens einen Speicher zum Speichern von mindestens der Sprachdatei, sowie mindestens eine Wiedergabevorrichtung zur akustischen Ausgabe der mindestens einen Sprachdatei und mindestens einen Schalter, mit dessen Betätigung die Wiedergabe der kontinuierlich empfangenen Medieninhalte zu Gunsten von mindestens einer der gespeicherten oder Sprachdateien verringert oder unterbrochen werden kann

## Beschreibung

Die Erfindung betrifft eine Koordinierungsvorrichtung, insbesondere eine Vorrichtung zur Koordinierung von kontinuierlich empfangenen Medieninhalten und Sprachmitteilungen, insbesondere eine Vorrichtung zur geordneten Wiedergabe von Medieninhalten.

Nachrichten werden heutzutage beispielsweise durch so genannte SMS übertragen. Short Message Service (engl. für "Kurznachrichtendienst", Abk. SMS) ist ein Telekommunikationsdienst zur Übertragung von Textnachrichten. Er wurde zuerst für den GSM-Mobilfunk entwickelt und ist nun in verschiedenen Ländern auch im Festnetz als Festnetz-SMS verfügbar.

Der Versand einer solchen Nachricht erfolgt grundsätzlich vom Mobiltelefon an die Kurzmitteilungszentrale (SMSC) des Netzbetreibers; sie sendet sich also nicht von einem Mobiltelefon direkt zu einem anderen. Die Nummer der Kurzmitteilungszentrale hat den gleichen Aufbau wie eine "normale" Mobilfunknummer (MSISDN = Mobile Subscriber Integrated Services Digital Network Number) und ist in den Einstellungen des Mobilfunkgeräts hinterlegt. Die Kurzmitteilungszentrale liest aus dem Header unter anderem die Zielnummer aus und sendet die Nachricht entweder im eigenen Netz an diese Zielnummer oder übergibt sie an den Netzbetreiber der Zielnummer. Die verschiedenen Netzbetreiber sind untereinander verbunden (interkonnektiert). Ist der Empfänger kein Mobilfunkgerät, sondern eine Anwendung (zum Beispiel im Fall einer Anmeldung bei einem Short-Message-Newsletter-Service), wird der Inhalt der Nachricht über Datenverbindungen an die Server des Service-Anbieters weitergeleitet.

Die Beschränkung auf 160 Zeichen bei einer SMS ergibt sich aus der maximalen Nutzdatenlänge des MAP (Mobile Application Part) des Signalisierungssystems Nummer 7. Dieses wird zur Übertragung der SMS zwischen dem Mobile Switching Center und dem SMSC verwendet. Aufgrund einer maximalen MSU (Message Signal Unit)-Paketgröße von 272 Oktetts im Signalisierungssystem Nummer 7 ist die verfügbare Nutzdatenlänge auf 140 Oktetts (140 Oktetts = 140 * 8 bits = 1120 bits) beschränkt. SMS können in verschiedenen Zeichenkodierungen übertragen werden, so beispielsweise in der GSM 7-bit Kodierung. Abhängig welche Zeichenkodierung gewählt wurde können maximal 160 GSM 7-bit (160 * 7-bit Zeichen = 1120 bits) Zeichen übertragen werden. In anderen Kodierungen sind sogar nur 140 8-bit Zeichen oder 70 16-bit Zeichen möglich. Bei überlangen SMS, so genannten Multi-SMS (Concatenated SMS, Long SMS) werden längere Texte aufgeteilt und einzeln versendet. Der Empfänger (sofern dazu fähig) setzt die Teile dann wieder zu einem zusammenhängenden Text zusammen.

Darüber hinaus gibt es auch so genannte "Sprach-SMS": eine Sprach-SMS ermöglicht es, eine Textnachricht einzugeben und sie als Sprachdatei beim Empfänger ausgeben zu lassen. Marktgängige Transkriptions-Software konvertiert hierbei die Nachricht nach der Texteingabe in eine Sprachdatei und eine bestehende Netzverbindung liefert sie an eine Handy- oder Festnetznummer weltweit aus. Hierbei bleibt insbesondere auch die SMStypische Verwendungsweise unverändert.

SMS und "Sprach-SMS" sind jedoch textgebunden und bestehen selbst dann aus eingegebenen Buchstaben, wenn diese beim Empfänger oder sonst wo nicht als Buchstaben abgezeigt werden, sondern beispielsweise mit Hilfe einer Software vorgelesen werden.

Weiterhin sind so genannte RSS-Feeds bekannt. Ein RSS-Feed (engl. to feed - im Sinne von "versorgen, einspeisen, zuführen") liefert dem Leser, wenn er einmal abonniert wurde, automatisch neue Einträge. Der Client sendet also in regelmäßigen Abständen Anfragen zur Aktualisierung des RSS-Feeds an den Server.

Nachdem der RSS-Feed abonniert wurde, kann der Abonnent die Nachrichten im Feedreader einlesen. Der Abonnent des RSS-Feeds kann dann direkt den angebotenen Links folgen und dort die vollständige Meldung lesen. Die Adresse eines RSS-Feeds sieht der einer "normalen" Webseite sehr ähnlich.

Zum Lesen eines RSS-Feeds dienen herkömmliche Webbrowser oder spezielle Programme, die auf die Ähnlichkeit zum Nachrichtenticker angepasst sind. Letztere nennt man (synonym) RSS-Aggregatoren, RSS-Reader oder Feedreader. Auch einige aktuelle E-Mail-Programme bieten bereits RSS-Lesefunktionen, ältere können durch Plugins erweitert werden. Daneben gibt es auch Anwendungen wie Bildschirmschoner.

Im Unterschied zur Benachrichtigung per E-Mail geht die Initiative bei RSS vom Empfänger aus, der den Feed abonniert hat. Das bedeutet, dass der Anbieter die Leser nicht auswählen kann, sich im Gegenzug aber auch nicht um eine Verwaltung des Leserstammes (zum Beispiel mit einer Mailinglisten-Software) kümmern muss. Der Leser muss nicht offen legen, dass er die Quelle beobachtet und kann Quellen wesentlich leichter abonnieren bzw. das Abonnement widerrufen, indem er einfach die Einstellung in seinem RSS-Aggregator vornimmt.

RSS vereinfacht insbesondere die Beobachtung einer großen Menge von Quellen wie z. B. Blogs, in denen es eher selten zu Änderungen kommt, deren Aktualisierung der Leser aber ggfs. nicht verpassen möchte.

RSS-Feeds sind jedoch ebenfalls textgebunden und bestehen selbst dann aus eingegebenen Buchstaben, wenn diese beim Empfänger oder sonst wo nicht als Buchstaben abgezeigt werden, sondern beispielsweise vorgelesen werden.

In der U.S. Patent 7,568,213 wird ein Konzept zum Podcasting geschützt. Podcasting bezeichnet das Produzieren und Anbieten von Mediendateien (Audio oder Video) über das Internet. Das Kofferwort setzt sich aus den beiden Wörtern iPod und Broadcasting zusammen. Ein einzelner Podcast (deutsch: ein Hörstück, genauer Hördatei oder Bewegtbilddatei) ist somit eine Serie von Medienbeiträgen (Episoden), die über einen Feed (meistens RSS) automatisch bezogen werden können.

Man kann Podcasts als Radio- oder Fernsehsendungen auffassen, die sich unabhängig von Sendezeiten konsumieren lassen. Derartige Videos heißen Video podcast, vblog oder Vidcast.

Podcasting wäre so als Teilbereich von Video/Audio-on-Demand zu betrachten. Jedoch stehen letztere Begriffe eher für kostenpflichtige und durchsuchbare Dienste, während "Sender" (im Jargon "Feeds" genannt) Podcasts in aller Regel kostenlos und in einer vom Konsumenten ausgewählten Menge nach und nach in neuen Folgen anbieten.

Nachteilig am Podcast ist, daß man eine Standleitung zum WWW dafür benötigt.

Es ist daher Aufgabe der vorliegenden Erfindung ein System bereitzustellen, welches Informationen schnell überträgt, schnell bedienbar ist und hierbei die obigen Nachteile vermeidet.

Gelöst wird die Aufgabe durch die Merkmale des unabhängigen Anspruchs.

Insbesondere wird die Aufgabe gelöst durch eine Vorrichtung zur geordneten Wiedergabe von Medieninhalten, insbesondere durch eine Vorrichtung zum Speichern und Wiedergeben von mehr als einer Sprachdatei, umfassend: mindestens ein Modul, mit dessen Hilfe Medieninhalte kontinuierlich empfangenden werden können, sowie mindestens eine Wiedergabevorrichtung zur Wiedergabe von diesen kontinuierlich empfangenen Medieninhalten mindestens ein Modul, mit dessen Hilfe per Fernkommunikationsmittel übermittelte Sprachdateien empfangenden werden können, sowie mindestens einen Speicher zum Speichern von mindestens der Sprachdatei, sowie mindestens eine Wiedergabevorrichtung zur akustischen Ausgabe der mindestens einen Sprachdatei und mindestens einen Schalter, mit dessen Betätigung die Wiedergabe der kontinuierlich empfangenen Medieninhalte zu Gunsten von mindestens einer der gespeicherten oder Sprachdateien verringert oder unterbrochen werden kann.

Diese hat den Vorteil, daß der Bediener dieser Vorrichtung die kontinuierlich empfangenen Medieninhalte jederzeit per Schalterbetätigung unterbrechen oder überlagern kann.

Bei der erfindungsgemäßen Vorrichtung des Mitteilungssystems handelt es sich um eine neue Kommunikationsform für mobile Telekommunikationsgeräte. Bei Instant Messagern, SMS, Email, Twitter oder Facebook steht die "Textnachricht" im Vordergrund. Allen gemein ist jedoch das Problem, dass für ihre Nutzung eine Tastatur von Nöten ist. Insbesondere auf mobilen Geräten ist diese unangenehm klein und umständliche zu bedienen.

Die erfindungsgemäß Vorrichtung des Mitteilungssystems stellt hingegen mit Hilfe des Merkmals der Sprachdatei die Sprache in den Vordergrund. Teilnehmer können mittels Sprache und nicht mittels Kurztexten miteinander kommunizieren, wobei die dem Konzept folgend die Vorteile moderner Kommunikationsformen respektiert werden.

Erfindungsgemäß können die kontinuierlich empfangenen Medieninhalte mit Hilfe von Fernkommunikationsmitteln von einem Medieninhalteversender zur Vorrichtung übermittelt werden und von der Vorrichtung empfangen und ausgegeben werden.

Derartige Anbieter generieren Nachrichteninhalte, bereiten sie in (üblicherweise digitale) Dateien auf und bieten sie Dritten auf diverse Weise als Dateien an. Eine Möglichkeit diese Dateien anzubieten, ist über mindestens einen Server per Fernkommunikationsmittel, wie z.B. Funk, Wifi, Internet o.ä. zum Bezug an. Der Bezug kann entgeltlich oder wie im Fall von Internetradio unentgeltlich sein.

Ein Interessent kann diese per Fernkommunikationsmttel in Gestalt von Dateien empfangen und auf seiner Empfangsvorrichtung kontinuierlich wiedergeben.

Der Bezug wiederum kann automatisiert erfolgen, z.B. per WiFi und/oder er kann nach einer Anforderung durch einen interessierten Nutzer erfolgen, beispielsweise indem er durch eine Anmeldung Zutritt auf die betreffende Website erhält, wie beispielsweise bei www.zatoo.com, dem Anbieter der Streams der in Deutschland gängigen TV-Sender, oder indem er die Inhalte des Anbieters z.B. über eine Website abonniert.

Bei den kontinuierlich empfangenen Medieninhalten handelt es sich insbesondere um kontinuierlich empfangene Bildinhalte und/oder Toninhalte, wobei die Toninhalte insbesondere Musikinhalte und/oder Sprachinhalte sind. Insbesondere sind hierunter Streamingangebote der Medienanbieter gemeint.

Da diese kontinuierlich wiedergegeben werden, stellt sich die Frage nach der Ausgabe von empfangenen Sprachdateien, insbesondere von durch Fernkommunikationsmittel empfangenen Sprachdateien, also die Frage, ob sie überhaupt während eines Streams wiedergegeben werden und wenn ja, in welcher Sequenz sie wiedergegeben werden.

Um miteinander zu kommunizieren, kann erfindungsgemäß mit Hilfe einer Aufnahmevorrichtung für Sprachdateien eine maximal zweiminütige, insbesondere maximal 10 sekündige Sprachdatei bestehend aus Datenpaketen welche eine Sprachdatei repräsentieren beispielsweise von einer weiteren erfindungsgemäßen Vorrichtung aufgenommen und an einen Empfänger versendet werden.

Die Sprachdatei wird durch die Aufnahmevorrichtung für Sprachdateien zur Übermittlung mit Hilfe eines Fernübertragungsnetzwerks aufbereitet und ist beispielsweise über einen Server mit einem Fernübertragungsnetzwerk verbunden. Das Fernübertragungsnetzwerk kann terrestrisch und/oder nicht terrestrisch sein. Ist es terrestrisch, kann vorzugsweise das Telefonnetz genutzt werden, ist es nicht terrestrisch, kann vorzugsweise das Mobilfunknetz, oder das WLAN-Netz o.ä. genutzt werden.

Beispielsweise können Sprachdateien einen Signalisierungs-Kanal des GSM-Standards wie etwa SDCCH (Stand-alone Dedicated Control Channel) oder FACCH (Fast Associated Control Channel) nutzen. Diese Kanäle werden auch genutzt, um Gespräche aufzubauen und zu halten. Erfindungsgemäße Sprachdateien kann man parallel zu einer Telefonverbindung versenden/empfangen. Hierzu wird ein Teil der Bandbreite des Verkehrsdatenkanals temporär zum Signalisierungskanal (SACCH) umkonfiguriert und zum Versand/Empfang einer Sprachdatei genutzt.

Der Versand einer solchen Nachricht kann auf einer erfindungsgemäßen Aufnahmevorrichtung, wie z.B. einem Mobiltelefon erfolgen und an eine an die Sprachdateienmitteilungszentrale eines Netzbetreibers übermittelt werden; Die Sprachdatei sendet sich dann nicht von einem Mobiltelefon direkt zu einem anderen, wie es beim Walkie-Talkie der Fall wäre. Die Nummer der Sprachdateienmitteilungszentrale kann den gleichen Aufbau wie eine "normale" Mobilfunknummer (MSISDN = Mobile Subscriber Integrated Services Digital Network Number) haben und ist vorzugsweise in den Einstellungen des Mobilfunkgeräts hinterlegt. Die Sprachdateienmitteilungszentrale liest aus dem Header unter anderem die Zielnummer aus und sendet die Nachricht entweder im eigenen Netz an diese Zielnummer oder übergibt sie an den Netzbetreiber der Zielnummer. Die verschiedenen Netzbetreiber sind untereinander verbunden (interkonnektiert). Ist der Empfänger kein Mobilfunkgerät, sondern eine Anwendung (zum Beispiel im Fall einer Anmeldung bei einem Short-Message-Newsletter-Service), wird der Inhalt der Nachricht über Datenverbindungen an die Server des Service-Anbieters weitergeleitet.

Die erfindungsgemäße Vorrichtung umfasst dann weiterhin eine Wiedergabevorrichtung für derartige Sprachdateien, wobei die Wiedergabevorrichtung die Sprachdatei in der Gestalt von Sprache ausgibt und nach der Ausgabe derselben vom Empfänger die Aufnahme einer Antwortsprachdatei einer vergleichbaren Sprachdatei erlaubt und diese Antwortsprachdatei an mindestens den ursprünglichen Sender zurückschickt.

Bei der Wiedergab der Sprachdatei kann der Bediener durch eine automatisierte Routine dabei unterstützt werden, gleich eine Antwortsprachdatei zu verfassen (aufzunehmen) und zur Versendung aufzubereiten (z.B. automatisiert mit einer Zielnummer zu versehen) und zu versenden,

Der wesentliche Vorteil im Vergleich zu anderen Vorrichtungen von Mitteilungssystemen ist, erstens, daß erfindungsemäß keine Tastatur von Nöten ist und zweitens, daß die Kommunikation unmittelbar stattfindet, und nicht durch ein Auswahlprocedere von z.B. Telefonnummern behindert wird, was insbesondere für das Antwortprocedere gilt.

Man erhält daher eine Sprachdatei als Nachricht zugeschickt, und hat die Wiedergabevorrichtung so eingestellt, daß die Mitteilung je nach Betätigungszustand des Schalters unmittelbar, oder auf die hinter dem Schalter hiterlegte Weise in jedem Fall aber gemäß der Erfindung priorisiert zur Wiedergabe von den permanenten Medieninhalte vorgetragen wird. Alternativ, wenn man sich in einer unpässlichen Situation befindet, kann man das Abspielen dieser Mitteilung auch unterdrücken, was bedeutet, daß sie erst nach dem Lösen der Unterdrückungsfuktion automatisch wiedergegeben wird. Beim Adressaten dann begibt sich die erfindungsgemäße Wiedergabevorrichtung nach der Wiedergabe beispielsweise automatisch und unmittelbar in die Aufnahmefunktion, um an den ehemaligen Sender eine Antwortnachricht versenden zu können. Soll diese Antwortroutine nicht automatisiert erfolgen, kann sie unterdrückt werden. Hierdurch fungiert die ehemalige Wiedergabevorrichtung auch als Aufnahmevorrichtung.

Der weitere Vorteil dieses Konzepts ist der automatisierte unterbrechungslose Ablauf, der auf einen reibungslosen Dialog über Server zu jeder geeigneten erfindungsgemäßen Vorrichtung, wie z.B. einem Mobiltelephon oder einem Smartphone erfolgen kann und erfindungsgemäß nicht durch permanente Wiedergabe von Streamingmedien dominiert wird.

Nach Empfang einer z.B. individuellen Sprachdatei antwortet der Empfänger daher mit einer Sprachdatei von zuvor z.B. durch den Netzanbieter festgelegter Länge, wie beispielsweise 10 Sekunden.

Realisierbar ist dieses Konzept auch auf Softwarebasis. Auf einer z.B. Website wird eine Eingabe gestartet und man erhält ohne extra Registrierung sofort meine persönliche Telefonnummer (z.B. 10-stellig) eingerichtet.

Dazu kann eine IMEI Nummer auf der SIM oder die Geräte ID genutzt werden.

Wesentlicher Nutzen derartiger Sprachdateien ist demgemäß:
- erfindungsgemäße Sprachdateien sind zeitbeschränkt, wie z.B. maximal 10 Sekunden lang und können unkompliziert zwischen den Benutzern ausgetauscht werden.
- Anstelle mit einer erfindungsgemäßen Sprachdatei zu antworten, kann auch der Empfänger oder die Empfängerin sofort in einen erfindungsgemäße Sprachdatei - Room mit dem Absender verbunden werden. So können sich alle Benutzer unkompliziert in einer Konferenz austauschen und so z.B. schneller verabreden.
- erfindungsgemäße Sprachdatei s können entweder an eigene Kontakte aus dem Telefonbuch oder an bestehende Kontakte in Social Networks wie Facebook, XING, LinkedIn oder StudiVZ gesendet werden.
- Durch die Bildung von Kommunikationsgruppen (erfindungsgemäße Sprachdatei - Groups), können auch erfindungsgemäße Sprachdatei-Shouts gesendet werden (ähnlich einer Zuhörgemeinschaft oder eines Podcasts)
- Auf einer Landkarte werden die Kontakte mit einer Statusanzeige angezeigt.
- Auch einer bislang unbekannten erfindungsgemäßen Vorrichtung in einem derartigen Mitteilungssystem kann man in der Umgebung anzeigen lassen und so neue Kontakte knüpfen. Durch das erfindungsgemäße Sprachdatei Profil hat man die Möglichkeit die Stimme sofort zu hören.
- Die integrierte Telefonfunktion lässt zudem günstig Telefongespräche in das öffentliche Telefonnetz führen.
- Der Dienst ist geräteunabhängig (verschiedene Mobiltelefone, Browser für alle Plattformen).

Als permanent zu übertragende Medieninhalte kommen beispielsweise als Podcasts, gestreamte Filmbeiträge z.B. von Onlinevideotheken, Fernsehsendungen, Inhalte von (z.B. live-) Überwachungskameras in Betracht. Der Unterschied zwischen den "Medieninhalten" und den Sprachdateien ist gemäß dieser Erfinudng, daß unter "Medieninhalten" kontinuierlich übertragene Medieninhalte zu verstehen sind, also Übertragungen von langer Dauer, wie z.B. einer langen Rede, einer Fernsehsendung, einer Widergabe von Liveinhalten. Insbesondere ist die Quelle der Inhalte nicht die erfindungsgemäße Vorrichtung selbst, sondern eine andere Vorrichtung, als die erfindungsgemäße Wiedergabevorrichtung.

Hierbei ist "Streaming Media" insbesondere der Oberbegriff für Streaming Audio und Streaming Video (auch bekannt als Web-Radio und Web-TV) und bezeichnet aus einem Rechnernetz empfangene und gleichzeitig wiedergegebene Audio- und Videodaten. Der Vorgang der Datenübertragung selbst wird hierbei als Streaming bezeichnet, und gestreamte Programme werden oftmals als Livestream bezeichnet.

Um Streaming-Media-Angebote nutzen zu können, ist auf der Empfängerseite beispielsweise eine spezielle Software erforderlich. Alternativ könnte auch eine reine Hardwarelösung die Streamingangebote ausgeben. Bei der Softwarelösung kann ein Plug-in sein, das z.B. in einen Web-Browser integriert ist, aber auch ein eigenständiges Wiedergabeprogramm. Ersteres wird automatisch aufgerufen, sobald eine angeforderte Seite Streaming-Media-Daten enthält.

Es existiert eine Vielzahl verschiedener konkurrierender Streaming-Media-Techniken. Die bekanntesten Vertreter sind:
Audio- und Video-Containerformate:
   - Flash Video Streaming
   - MP3
   - MP4
   - Nullsoft Streaming Video
   - Ogg (Vorbis, Theora)
   - Quicktime
   - Real Media
   - Windows Media
Streaming-Software und -Server:
   - Catra Streaming Platform
   - Darwin Streaming Server/ QuickTime Streaming Server
   - FFserver
   - Helix Server
   - Icecast (Open Source, nur Audio)
   - Icecast2 (Freie Software)
   - Jinzora Broadcast Server-Software (Freie Software)
   - LSCube/Feng (Freie Software), RTSP-fähig, beherrscht auch neuere freie Audio- und Videoformate
   - MediaTomb (Open Source), UPnP-fähig, Streaming Server fürs Heimnetz (PC und Standalone-Geräte), Unterstützt Echtzeit-Enkodierung
   - No23Live (Freeware, nur Audio)
   - PeerStream Broadcast Server
   - SHOUTcast
   - VideoLAN Server (Freie Software)
   - Wirecast
Typische Datenübertragungsraten der Ausgangsdaten sind:
   - Audio: meist im Bereich zweistellige kBit/s
   - Video: einige hundert kBit/s bis einige MBit/s (bei Triple-Play-Angeboten)
Typische zur Verfügung stehende Datenübertragungsraten sind:
   - analoges Modem: bis 56 kBit/s
   - ISDN: 64 oder 128 kBit/s
   - DSL und Kabelmodems: 0,7-50 MBit/s
   - FTTH: 10 MBit/s bis 1 GBit/s
   - LAN: 100 MBit/s oder 1 GBit/s

Da die Wiedergabe der Daten gleichzeitig mit dem Empfang stattfinden soll, muss eine ausreichende Datenübertragungsrate zur Verfügung stehen. Es ist notwendig, dass die Datenübertragungsrate, die für die Übertragung zur Verfügung steht, größer ist als die für das Streaming verwendete Datenübertragungsrate. Die zu sendenden Audio- und Videodaten müssen deshalb vor der Übertragung komprimiert werden. In den meisten Fällen geschieht dies verlustbehaftet, da nur so eine handhabbare Datenmenge pro Zeiteinheit erreicht werden kann.

Um unterschiedliche Laufzeiten der Datenpakete im Netz auszugleichen und damit verbundene Stockungen zu verhindern, wird im Medienplayer ein Puffer verwendet. Deshalb erfolgt die Wiedergabe auch leicht verzögert, typischerweise um 2 bis 6 Sekunden. Reicht dieser Puffer nicht aus, wird er von manchen Medienplayern dynamisch vergrößert.

Da Videodaten in aller Regel eine höhere Datenrate als Audiodaten haben, ist hier auch eine wesentlich stärkere Komprimierung erforderlich. Diese ist bezüglich der verwendeten Algorithmen ausgefeilter und bezüglich der benötigten Rechenleistung aufwendiger.

Bei gleicher Komprimierungsart sinkt dabei die Qualität mit der Datenübertragungsrate, auf die der Datenstrom verkleinert werden soll. Die sicht- und hörbare Qualität eines Streams hängt deshalb wesentlich von den folgenden Faktoren ab:
- der Art und Qualität des Ausgangsmaterials
- der verwendeten Komprimierungsmethode
- der für die Übertragung nutzbaren Datenübertragungsrate, welche meist durch den Internetzugang begrenzt wird.

Arten: "On-demand-Streaming":
   - Daten werden vom Server über das Netz an den Client übertragen
   - die Wiedergabe erfolgt bereits während der Übertragung
   - Zwischenpufferung für lückenlose Wiedergabe
   - Vor- Zurückspulen und Pausieren möglich
   - Protokolle: HTTP, FTP
Arten: "Live-Streaming"
   • Bereitstellung des Angebotes in Echtzeit
   • Protokolle: RTP, RTCP, RTSP

Erfindungsgemäß muß hinsichtlich der Frage einer Priorisierung von diesen permanent übertragenen Medieninhalten in Konkurrenz zu den Sprachdateien ein Schalter betätigt werden.

Erfindungsgemäß kann der Bediener daher mit Hilfe der Betätigung eines Schalters die Funktion aktivieren, so daß die Medienwiedergabe während der Wiedergabe der Sprachdateien unterbrochen, oder überlagert wird. Dies bewirkt, daß der Inhalt der Sprachdatei klarer verstanden werden kann, da die Wiedergabe der Sprachdatei nicht durch die Wiedergabe der Medien bestört oder behindert wird.

Entsprechend der Programmierung können hereinkommende Sprachdateien nach Betätigung des Schalters sofort während der Medienwiedergabe wiedergegeben werden (diese überlagernd oder unterbrechend). Dabei kann der Schalter entweder so wirken, daß ab Betätigung des Schalters jede neue Sprachnachricht wiedergegeben wird, oder neue Dateien erst in den Speicher anlegen und dann den gesamten Speicherinhalt wiedergeben. In letzterem Fall wird bewirkt, daß alle während der Wiedergabe von Medieninhalten im Speicher aufgelaufenen und noch nicht wiedergegebenen Sprachdateien wiedergegeben werden können.

Wenn nach Betätigen des Schalters mehr als eine Sprachdatei zur Wiedergabe ansteht, stellt sich die weitergehende Frage ob alle oder nur ein Teil der aufgelaufenen Sprachdateien wiedergegeben wird. Diese Festlegung kann zuvor mit Hilfe einer Programmierung erfolgen.

So ist in gewissen Situationen eine Programmierung vorteilhaft, aufgrund welcher hereinkommende Sprachdateien nicht sofort wiedergegeben werden, sondern gespeichert werden und dann in ihrer Reihenfolge entsprechend von eigens festzulegenden Wiedergaberegeln für gespeicherte Sprachdateien wiedergegeben werden.

Diese Wiedergaberegeln können lauten:
- Wiedergabe aller oder der ersten/ältesten x-Stück an Sprachdateien alle y Minuten/Stunden/Tage...
- Priorisierte Wiedergabe der qualitativ am hochwertigsten priorisierten Sprachdateien (z.B. von POIs) sofort oder an erster Stelle eines zeitlich definierten Wiedergabefensters oder einer örtlich definierten Distanz zum betreffenden POI.
- Priorisierte Wiedergabe der Sprachdateien, welche von priorisierten Personen stammen (z.B. der Familie, oder der Firma) sofort oder an priorisierter Stelle eines zeitlich definierten Wiedergabefensters.
- Priorisierte Wiedergabe der Sprachdateien, welche von priorisierten Quelle/Firmen stammen (z.B. Anbieter von Börsennachrichten, oder Zeitungsschlagzeilen) sofort oder an erster Stelle eines zeitlich definierten Wiedergabefensters.
- Subjektive Priorisierungen (z.B. neue Staumeldungen und/oder aktuelle interessierende Inhalte, wie z.B. Wetter etc.) sofort oder an erster Stelle eines zeitlich definierten Wiedergabefensters.

Ein derartiger Schalter kann an allen Arten von Medienwiedergabegeräten angebracht werden, insbesondere und nicht ausgrenzend seien in Gestalt eines Hardwareschalters beispielhaft aufgezählt: (Auto)Radiogeräte, Fernsehgeräte, (mobile) Computer, (Mobil)-Telephone, Smartphones. Darüber hinaus kann dieser Schalter auch softwarebasiert sein, und beispielsweise in die Bedienoberfläche von kontinuierlich übertragenden Internetradios und/oder in die Bedienoberfläche von kontinuierlich übertragenden Internet-TV-Inhalten.

Zu diesem System können weiterhin folgende Ergänzungen durchgeführt werden, wobei diese folgenden Ergänzungen rein beispielhaft und nicht abschließend sind:
Beispiel alternative Netze: So ist es alternativ auch möglich per VoIP to VoIP kommunizieren, die erfindungsgemäße Gesprächsmeldung aber auch auf eine andere Nummer (bzw. mein iPhone) während des Gesprächs "parken" und weiterleiten.

Auf einer Eingabemaske können enthalten sein: Mehrere Fotos. Alter, Geschlecht, Hobbies, Interessen usw. Gesprochenes persönliches Profil wie bei "ChatLines". Für unterschiedliche "Aliase" können jeweils unterschiedliche Profile angelegt werden.

Beispiel Option Line2: Günstiger kommunizieren: Das erfindungsgemäße Mitteilungssystem wählt eine Festnetznummer an und vermittelt dann weiter. Guthaben können z.B. per iTunes gekauft werden.

Weiterhin können bei "GSM Call Through" Gespräche geführt werden. (Line2). Es wird dann im entsprechenden Land eine lokale bzw. 0800er Nummer angerufen und über diesen dann günstig kommuniziert. Hierbei erfolgt die Übernahme des AudioCodes direkt oder IMRF. Eine Finanzierung kann über Werbeeinblendung beim Kommunizieren erfolgen.

Beispiel Inbound Nummern: Weiterhin können Inbound Nummern in zahlreichen Ländern zur Verfügung gestellt werden. Entweder als 0800er mit DDI oder als richtige Festnetznummern. So kann man in verschiedenen Ländern für Kunden günstig erreichbar sein.

Beispiel Parken: Eine weitere Möglichkeit ist eine erfindungsgemäße Sprachdatei, bzw. einen erfindungsgemäßen Sprachdateienablauf zu parken. In einem solchen Fall kann beispielsweise eine persönliche Wartemusik aus einer Musikbibliothek eingespielt werden.

Beispiel Rufweiterleitung: erfindungsgemäße Sprachdateien auf meine PSTN bzw. VoIP Nummer und Aliase können Rufweiterschaltung nutzen. Bei Rufweiterschaltung erhält man beispielsweise eine Wartemusik oder wenn der Empfänger einer Mitteilung diese annimmt, einen korrespondierenden Text z.B.: "Sie erhalten einen erfindungsgemäße Sprachdatei für Ihren Alias "Heiko Hamburg". Möchten Sie den erfindungsgemäße Sprachdatei annehmen? Dies kann auch zeitgesteuert genutzt werden bzw. über GPS (Profil) automatisch erkannt werden.

Beispiel Dashboard: Wird außerdem z.B. das Softwareanwendungsprogramm gestartet, können vorteilhafterweise die fälligen erfindungsgemäßen Sprachdateien angezeigt werden; ergänzend / alternativ können diese direkt angerufen werden. Geburtstagslisten werden z.B. automatisch ermittelt und angezeigt.

Beispiel Anrufreminder: Weiterhin ist für einen Kontakt Datum/Zeit einer abzusetzenden erfindungsgemäßen Sprachnachrist festlegbar. Dieses kann beispielsweise mit Hilfe des Dashboard angezeigt werden.

Für den Fall, daß der Adressat einer abzusetzenden erfindungsgemäßen Sprachdatei nicht erreichbar ist, so kann bzw. wird der Anrufreminder automatisch vorschlagen. "Kontakt in 15 Minuten erneut anrufen?". Optional erfolgt eine Erinnerung auch per PNS.

Das gleiche gilt für z.B. einen Glückwunschanruf. So kann in diesem Fall dem B-Teilnehmer (also dem Angerufenen) im Hintergrund ein Happy-Birthday-Song vorgespielt werden, während der Absetzer der erfindungsgemäßen Sprachdatei gratulieren kann.

Beispiel Sprachmemo: Erfindungsgemäße Sprachdateien können mit Hilfe eines in der Aufzeichnungsvorrichtung enthaltenen Speicher auch aufgezeichnet werden. Nach einem Kommunikationsaustausch ist dann eine Art Sprachmemofunktion vorhanden, nur halt ohne B-Teilnehmer. Diese Sprachmemos von erfindungsgemäßen Sprachdateien können per Email an einen in der Aufzeichnungsvorrichtung enthaltene freie Email weitergeleitet werden. Für diesen Fall können bestimmte E-Mail Kontakte vordefiniert werden.

Auch ist die Übersetzung dieser Sprachmemos von Voice to Text, automatisch oder durch Inmate Service möglich. Ein Hochladen bzw. eine Schnittstelle zu SAP bzw. einem anderen CRM System oder einer eigenen Website ist ebenfalls möglich.

Weitere mögliche Merkmale wären darüber hinaus:
- Call Through
- Voice Chat
- Voice Chatroom
- Voice Message
- Voice Twitter

Realisierbar wäre es beispielsweise über VoIP to VoIP auf Basis einer Guthabenversion oder einer weiteren Version inkl. der Möglichkeit, eine SIP Provider anzulegen.

Im Gegensatz zu andern Diensten, wie z.B. auf dem iPhone, ist im erfindungsgemäßen Fall eine Registrierung nicht unbedingt notwendig.

Je mehr Benutzerdaten durch den Anwender eingepflegt werden, desto mehr Services können zur Verfügung gestellt werden.

Hierzu gehören: Bilder, Email und persönliche Daten.

Es kann dann automatisch ein Ranking erfolgen, bzw. nach Beliebtheit, welches nur erzielt werden kann, wenn Echtdaten vorliegen.

Erreichbar ist dies z.B. durch einen Screen mit den meisten Zuhörgemeinschaften. Dessen Ergebnis wäre die Auskunft, wer die beliebten Nutzer des erfindungsgemäßen Mitteilungssystems sind.

Vorteilhafterweise bestehen die erfindungsgemäßen kontinuierlich empfangenen Medieninhalte aus Toninhalten und/oder Bildinhalten.

Als Toninhalte kommen beispielsweise als Sprachdateien versandte Nachrichten, individuell erstellte Mitteilungen, Börsenkurse, Sportergebnisse, Erinnerungen Sprach-RSS-Feeds o.ä. in Frage.

Als Bildinhalte kommen beispielsweise als Podcasts, gestreamte Filmbeiträge z.B. von Onlinevideotheken, Fernsehsendungen, Inhalte von (z.B. live-) Überwachungskameras in Betracht.

Wesentlich ist all diesen Inhalten, daß der Zeitraum, in welchem sie an der Ausgabevorrichtung ausgegeben werden auf längeren Zeitraum angelegt sind und daher nicht als ganze Datei in der Vorrichtung selbst gespeichert werden. Damit kann als ein Unterscheidungskriterium zwischen den gestreamten / kontinuierlich übertragenen Medieninhalten und den Sprachmitteilungen angegeben werden, daß sich die Sprachmitteilung immer als ganzes auf der erfindungsgemäßen Vorrichtung befindet, während von den kontinuierlich übertragenen Medieninhalten bestenfalls ein sich dauernd ändernder Ausschnitt nicht im Speicher, sondern in einem Zwischenpuffer abgelegt wird. Damit ist ein zweites Unterscheidungskriterium, daß die Sprachdatei immer als ganzes in den Speicher hineingeschrieben und dort wieder gelöscht wird und niemals verändert wird, während die Daten der kontinuierlich übertragenen Medieninhalte permanent verändert werden.

Vorteilhafterweise kann die Sprachdatei wie oben beschrieben mit Hilfe von Fernkommunikationsmitteln zur Übertragung von Sprachdateien zur Vorrichtung übermittelt werden und von der Vorrichtung empfangen und ausgegeben werden können.

Als Fernkommunikationsmittel zur Übertragung von Sprachdateien kommen aufgrund der eher geringen notwendigen Bandbreite in erster Linie Kanäle von Funktelephonverbindungen in Frage, aber auch alle anderen Verbindungen, welche geeignet sind die anfallenden Datenmengen zu übertragen.

Außerdem können die kontinuierlich empfangenen Medieninhalte mit Hilfe von Fernkommunikationsmitteln von einem Medieninhalteversender zur Vorrichtung übermittelt werden und von der Vorrichtung empfangen und ausgegeben werden können.

Als Fernkommunikationsmittel für Medieninhalten kommen aufgrund der notwendigen Bandbreite in erster Linie Internetverbindungen in Frage, aber auch alle anderen Verbindungen, welche geeignet sind die anfallenden Datenmengen zu übertragen.

Wenn die Sprachdateien den Inhalt einer Börsenmitteilung, oder eines redaktionellen Nachrichteninhalts, oder eines individuellen Mitteilungsinhalts, oder einer werkseitig vordefinierten Beschreibung eines POI, oder von Wetterdaten, oder von Inhalten des Adressbuchs, oder von Inhalten angefertigter Notizen, oder von Inhalten von Voice-Feeds, oder von Inhalten von Voicemails, oder von Inhalten von Nachrichten repräsentieren, so ist dies eine Auswahl an möglichen konkurrierenden Medieninhalten, deren Priorisierung der Besitzer der Vorrichtung vornehmen kann. Das selbe gilt für den Fall, daß die Medieninhalte akustische und/oder bildliche und/oder schriftliche Medieninhalte sind.

Wenn eine solches Vorrichtung innerhalb eines derartigen Mitteilungssystems umfassend in der Aufnahmevorrichtung und/oder in der Wiedergabevorrichtung einen Datenspeicher, in welchen pro Zielperson mindestens einen Namen (Alias) und pro Name mindestens eine Adresse von potentiellen Empfängern einer erfindungsgemäßen Sprachdatei eingebbar ist, dann bewirkt dies, daß Kontaktpersonen leichter auffindbar und aufrufbar sind.

Für jeden Alias sind vorzugsweise unterschiedliche Kontakte möglich oder besser gesagt, ist festlegbar, welcher Kontakt welchen Aliasen zur Verfügung steht. So können auch verschiedene Adresslisten angelegt werden, vom Typus: Privat, Business, Chat.

Weiterhin können andere Teilnehmer auch per Email "eingeladen" werden und gleichzeitig auch automatisch in die eigene erfindungsgemäßen Kontaktliste aufgenommen werden. Diese Email kann parallel zur erfindungsgemäßen Sprachdatei und durch diese ausgelöst an den / die Adressaten übermittelt werden.

Weiterhin sind folgende Merkmale vorteilhaft:
- Anwählen eines Kontakts
- Aufruf des Anrufprotokolls
- Festlegen eines Anrufreminders
- Möglichkeit Kontakte zu blockieren
- Status: Online, Moodes: Lust auf Kino, Kaffee, Shoppen, kommunizieren, Kennen lernen.
- Anrufprotokoll:
- Chronologisch absteigende Liste mit den Anrufen. Symbol für Aufzeichnung, GPS Position, Sprachmemo. Detailansicht: Erneut chronologisch absteigende Liste, aber diesmal auf die Kontaktnummer gefiltert.

Beispiel Aliasnamen: Weiterhin können eine begrenzte Zahl, wie z.B. bis zu 4 weitere Aliasnamen vergeben werden (Privat, Firma, Chat, Social Netze) und mit verschiedenen Adresslisten (Kontakten) dazu verbunden werden.

Man bekommt hierzu nicht nur eine eigene feste Nummer, sondern kann diese jederzeit wieder ändern, löschen usw. So kann man an bisher "unbekannte" Personen eine Nummer bzw. Namen rausgegeben werden, die jederzeit schnell wieder gelöscht bzw. deaktiviert werden kann.

Beispiel Voicemail: Weiterhin ist beispielsweise eine Voicemail pro Alias aktivierbar bzw. kann zeitgesteuert genutzt werden bzw. über GPS (Profil) automatisch erfolgen. Eine solche Voicemail kann beispielsweise wie "VisualVoice" behandelt werden. Eine solche Voicemail kann außerdem in das erfindungsgemäße System eingebunden werden und in diesem weitergeleitet werden.

Das Aufnehmen einer Voicemail kann wie folgt erfolgen:
Man wählt einen der Kontakte aus dem Adressbuch aus und drückt dann zusätzlich zur erfindungsgemäßen Sprachdatei noch auf die Funktion "VoiceMail".

Der Empfänger erhält diese VoiceMail und kann nun auf diese direkt "antworten" oder ein "Live Gespräch" mit mir initiieren. Hierfür kann die Telefontastatur für direkte CallThrough-Gespräche genutzt werden.

Wenn bei einer solchen Vorrichtung die Adressen von Empfängern im Datenspeicher zu Adressgruppen zusammengeschlossen werden können, dann bewirkt dies, daß Gruppen anlegbar sind.

Auf diesem Wege ist es möglich erfindungsgemäße Mitteilungen nicht nur zu einer Person, sondern zu mehreren Personen zu schicken.

Wenn bei einer solchen Vorrichtung diese Sprachdatei durch eine Antwortsprachdatei erwiederbar ist und per Fernkommunikationsmittel als Antwortspardatei an den ursprünglichen Versender der Sprachdatei übermittelbar ist, dann bewirkt dies, daß Rundmitteilungen mit derartigen Sprachdateien erstellbar sind.

Wird als Antwortziel nicht eine Person definiert, sondern die Gruppe, in welcher sich diese Person befindet, hat man im Prinzip eine Zuhörgemeinschaft. Eine Zuhörgemeinschaft greift Erfindungsgemäßen Mitteilungssystem auf und schafft so Menschen die Möglichkeit, eine kurze Information an andere zu "posten". Im Gegensatz zu anderen Austauschmedien mit Hilfe von Sprache, können die sich in einer solchen Zuhörgemeinschaft befindlichen Personen nun auch einfach zurückmelden, was nichts anderes bedeutet, als daß sich innerhalb der Zuhörgemeinschaft ein Gesprächsraum eröffnet.

Wenn bei einer solchen Vorrichtung mindestens eine Sprachdatei zusätzlich in die Gestalt eines Textes übertragen wird und als Textnachricht ausgebbar und / oder als Textnachricht übermittelbar ist, dann bewirkt dies, daß ein derartiger Austausch protokolliert werden kann.

Damit dieser erfindungsgemäße Dialog übersichtlich bleibt, können die erfindungsgemäßen Sprachdateien in ein Textformat übertragen werden und diese aus einer Sprachdatei in eine Textnachricht übertragenen Fragmente können auf dem Display des Absenders und/oder des Empfängers zusätzlich zur Sprachausgabe z.B. in Gestalt einer Sprachblase angezeigt werden, und/oder per Textfernübermittlung wie z.B. Fax bzw. Mail als Bestätigung des Gesprochenen verschickt werden.

Wenn bei einer solchen Vorrichtung diese in eine Sprachdateigestalt transformierten Schreibtexte Überschriften und/oder Zusammenfassungen von Zeitungs- und/oder Zeitschriftenartikeln repräsentieren, dann bewirkt dies, daß als Antwort auf eine Anfrage diese dem Interessenten vorgetragen werden.

Diese Funktion erlaubt es, wenn eine erfindungsgemäße Sprachdatei an einen Anbieter z.B. von Sprachdateien geschickt wird, der Anfragende automatisch eine definierbare Anzahl dieser Sprachdateien zugesendet bekommt. Hierbei kann es sich beispielsweise um Schlagzeilen oder Kurzberichte von Zeitungsherausgebern handeln.

Wenn bei einer solchen Vorrichtung die Sprachdatei Teil einer Bildnachricht und/oder Videonachricht ist, dann bewirkt dies, daß weitere Inhalte übertragen werden können. Weiterhin kann während eines Kommunikationsablaufs zusätzlich zur Sprachdatei ein Foto an den Gesprächspartner übermittelt werden. Das gleiche gilt auch für das Zeigen eines Whiteboard oder die Möglichkeit, per Google Maps zu zeigen, wo sich eine beliebige Person gerade aufhält. Im Fall, daß die erfindungsgemäße Sprachdatei mit einer Musikdatei verbindbar ist bzw. verbunden wird, ist es möglich dem Gesprächspartner aus der Musikbibliothek einen Musiktitel vorzuspielen.

Wenn bei einer solchen Vorrichtung die Sprachdatei mit einer Sprechdauer von bis zu zwei Minuten umfasst, dann bewirkt dies, daß der Speicherplatz begrenzbar ist. Insbesondere kann diese Zeit auch verkürzt werden, beispielsweise Hinterlegung eines anderen Tarifs; auf beispielsweise 10 Sekunden.

Wenn bei einer solchen Vorrichtung die Sprachdatei mit einer Dateigröße von bis zu einem MB umfasst, dann bewirkt dies eine aktive Begrenzung des Speicherplatzes.

Wenn eine solche Vorrichtung einen Server umfasst, welcher auf Anfrage den Teilnehmern den Zutritt an eine Konferenzfunktion bereitstellt, dann bewirkt dies, daß der Server Steuerungsfunktionen ausüben kann.

Weiterhin kann eine erfindungsgemäße Sprachdatei auch in einen Chatroom führen bzw. mit anderen Chat Clients gekoppelt werden.

Beispiel Voice-Konferenzen / Chat Rooms: Beispielsweise kann per erfindungsgemäßer Sprachdatei an einen Telefoneintrag die Sprachdatei verschickt werden: "Habe heute Abend Lust auf Kino. Du auch?". Diese Sprachdatei wird je nach Voreinstellung entweder an ein Individuum, oder eine definierte Gruppe / Freunde (Zuhörgemeinschaft) versendet. Diese können nun entweder per Sprachdatei antworten oder den Absender in einer Sprachdateikonferrenz treffen. Dazu schickt der Betreffende mit seiner Anwendung eine Sprachdateikonferrenz-Einladung an den Server, die der ursprüngliche Mitteilungssender erhält, so dass sich auch die Aufnahmevorrichtung des ursprünglichen Senders z.B. mit Hilfe eines z.B. Softwareanwendungsprogramms sich z.B. über den Server in die Sprachdateikonferrenz einwählt. Nun befinden sich alle Beteiligten in einer Konferenz und können sich unterhalten und natürlich untereinander auch weitere Inhalte austauschen. Natürlich können auch andere Mitglieder einer vordefinierten Gruppe, die die ursprüngliche Sprachdatei erhalten haben in der Sprachdateikonferrenz teilnehmen. So können sich nach und nach alle in der Sprachdateikonferrenz treffen und z.B. zum Kino verabreden. Freunde, die die Sprachdatei erhalten haben, aber keine Zeit haben oder gerade nicht in die Sprachdateikonferrenz kommen können, können eine z.B. vordefinierte Sprachdatei in die Sprachdateikonferrenz senden, die dann alle Hören, wie z.B.: "Eine Sprachdatei von Albert: Würde gerne mitkommen, kann aber erst um 22 Uhr."

Während die Mitteilungsinteraktion sequentiell verläuft, verläuft nach dem Eintritt in einen der vorgestellten Kommunikationsräume die Kommunikation parallel.

Beispiel RSS-Feed Im Unterschied zur Benachrichtigung per E-Mail geht die Initiative bei RSS vom Empfänger, also in erfindungsgemäßen Fall vom Absender einer erfindungsgemäßen Sprachdatei aus, der den Feed abonniert hat. Das bedeutet, dass der Anbieter die "Leser", also im erfindungsgemäßen Fall die Empfänger der Antwortsprachdatei nicht auswählen kann, sich im Gegenzug aber auch nicht um eine Verwaltung des Interessentenstamms (zum Beispiel mit einer Mailinglisten-Software) kümmern muss. Der Empfänger des Feed-Dienstes muss nicht offen legen, dass er die Quelle beobachtet und kann Quellen wesentlich leichter abonnieren bzw. das Abonnement widerrufen, indem er einfach die Einstellung in seinem RSS-Aggregator vornimmt.

RSS vereinfacht insbesondere die Beobachtung einer großen Menge von Quellen wie z. B. Blogs, in denen es eher selten zu Änderungen kommt, deren Aktualisierung der Leser aber ggfs. nicht verpassen möchte.

RSS-Feeds können in das erfindungsgemäße Mitteilungssystem eingebunden werden, indem eine erfindungsgemäße Sprachdatei an eine Feed-Dienst geschickt wird, die beispielsweise den Inhalt hat "Bitte Bildzeitungsschlagzeilen abonnieren". Der RSS-Anbieter erkennt diese Anfrage und sendet unmittelbar als Sprachdatei über das Netz die Sprachdatei mit den Schlagzeilen. Dies wäre nicht möglich, wenn wie bei SMS üblich zunächst eine Auswahl- und Bestätigungsroutine durchlaufen werden müßte

Beispiel Podcast: Natürlich kann man die Sprachdateikonferrenz auch so nutzen, dass man z.B. eine Art Einladung an seine Zuhörgemeinschaft zu einem Live Podcast versendet. Diese könnte z.B. lauten: "Heute Abend um 19 Uhr berichte ich über die Features des iPhone 4.0." Um 19 Uhr können sich dann alle Interessierten auf die Sprachdateikonferrenz einwählen und dem Einladenden "live" zuhören. Sich mit einer "Hand" melden und so dem "Publikum" Ihre Meinung mitteilen.

Natürlich können so auch Firmen ihren Fans neue Produkte vorstellen und mit Fans diskutieren. Während Videos gezeigt, Bilder getauscht usw. werden

Gruppen können sowohl "privat" als auch "öffentlich" sein. Dabei kann derjenige, der die Gruppe angelegt hat entscheiden, ob alle diese Gruppe sehen können oder nur Kontakte aus seine Kontaktliste. Zudem kann ein Moderator entscheiden, ob die anderen Mitglieder auch in einen Gemeinschaftsraum des erfindungsgemäßen Mitteilungssystems dürfen oder einfach nur lauschen können. Weiterhin kann der Moderator entscheiden, ob andere sich selbst der Gruppe hinzufügen können (mittels eines "Mitglied werden" Buttons) oder der Moderator die Anfrage freigeben muss. Dann greift das gleiche System wie bei der Kontaktliste. Das Mitglied wird in der Gruppenliste farbig hinterlegt, z.B. grau angezeigt und der Moderator muss über die Schaltflächen "akzeptieren" bzw. "ablehnen" den Kontakt freigeben. Erst dann werden dem Kontakt die erfindungsgemäße Sprachdatei Messages der Gruppe angezeigt und er kann an Konferenzen teilnehmen. Ebenfalls werden dem Kontakt solange keine Voile Shorts zugestellt.

Wie funktioniert eine solche Kontaktliste / Adressliste / Adressguuppe? Grundsätzlich kann man auf die Profile anderer Teilnehmer des erfindungsgemäßen Mitteilungssystems ohne eine bestimmte Freigabe zugreifen und so z.B. die Infos bzw. die public Bilder des Users sehen.

Um ein Profil in die eigene Kontaktliste hinzuzufügen und so auch zusätzlich die Freunde sowie seine privaten Bilder zu sehen, ist eine Freigabe durch den anderen Nutzer des erfindungsgemäßen Mitteilungssystems notwendig.

Aus dem z.B. iPhone Telefonbuch können so Kontakte ganz einfach in das eigene Gerät des erfindungsgemäßen Mitteilungssystems als Kontaktliste hinzugefügt werden. Gleiches gilt natürlich mit Kontakten aus Facebook oder XING. Die entsprechende Suchmaske zeigt dabei die Kontakte sortiert nach Alphabet bzw. Community-Gruppen an. Natürlich kann man auch Kontakte durch eine Suche in der Community hinzufügen.

Hat man einen Kontakt neu hinzugefügt, so wird dieser in einer anderen Farbe, z.B. einem leichten grau angezeigt. Damit soll signalisiert werden, dass der Kontakt noch nicht für die Kommunikation im erfindungsgemäßen Mitteilungssystem freigeschalten wurde. Mitteilungen des erfindungsgemäßen Mitteilungssystems können dem Empfänger auch per Email zugestellt werden (dies gilt jedoch nicht für Kontakte aus der Community des erfindungsgemäßen Mitteilungssystems, diese erhalten natürlich direkt die erfindungsgemäße Sprachdatei).

Hat man eigene Kontakte hinzugefügt, so erhalten diese z.B. per Email eine Einladung, doch auch das erfindungsgemäße Mitteilungssystem zu nutzen. Folgt der Kontakt der Einladung, so wird sein Kontakteintrag in der Kontaktliste des Absenders freigeschaltet und gleichzeitig auch der Absender in die Kontaktliste des Empfängers eingetragen.

Solange man noch auf die Bestätigung des Empfänger wartet, wird in der Kontaktübersicht vorzugsweise ein Button angezeigt, mit dem man erneut den Empfänger zum Beitritt zum erfindungsgemäßen Mitteilungssystem einladen kann (Erinnerung). Ein Statusfeld in der Liste zeigt beispielsweise, wann der Kontakt letztmalig eingeladen wurde.

Beim Hinzufügen von Mitgliedern des erfindungsgemäßen Mitteilungssystems ist das System identisch. Nur dass keine "Einladung" per Email erfolgt. Vielmehr wird die "Anfrage" in die

Kontaktliste des Erfindungsgemäßen Mitteilungssystem Empfängers eingetragen. In der Listenanzeige werden dann bei diesem Kontakt zwei Schaltflächen angezeigt: "Hinzufügen" oder "Ablehnen".

Weiterhin können in einem erfindungsgemäßen Mitteilungssystem auch Mitglieder aus einer Community hinzugefügt werden, auch wenn er sein Profil nur für seine Freunde sichtbar geschaltet hat:
Hierzu muß der genaue Profilnamen Nutzers bekannt sein. In der Suchmaske kann dieser dann eingetragen werden und an ihn dann sozusagen eine Blindanfrage geschickt werden. Diese Freigabe durch den anderen User erfolgt genauso wie normalen Anfragen in einer Community des erfindungsgemäßen Mitteilungssystems.

Lehnt man die Anfrage jedoch ab, so erhält der Absender keine Info. So wird verhindert, dass der Anfragende erkennt, dass der Name des Anfragenden korrekt ist, der andere aber keinen Kontakt haben will.

Die Anfrage bleibt beim Anfragenden dann weiterhin in der Liste.

Mit der Swipe-Löschfunktion kann dieser die Anfrage dann ggf. löschen.

Da es möglich ist, direkt Mitteilungen mit anderen Teilnehmern des erfindungsgemäßen Mitteilungssystems auszutauschen, ohne dass diese das erst bestätigen müssen, gibt es beim Erhalt einer erfindungsgemäßen Sprachdatei immer die Möglichkeit, diesen Nutzer zu blockieren. Blockierte Nutzer werden mir ebenfalls in die eigene Kontaktliste eingetragen, so dass diese Blockade auch aufgehoben werden kann.

Beispielfunktion Voice Shout:
- One to many
- Konferenzantwort

Zu Beginn sind keine Kontakte sichtbar. Es müssen zunächst aus der eigenen Kontaktliste die eigenen Lieblings-Kontakte hinzufügen oder es werden alle Kontakte angezeigt und man kann "Alle anwählen" bzw. "Alle abwählen" oder einzelne auswählen (extra Screen für die Kontaktauswahl). Auf diesem Wege kann eine "Favoritenliste" erstellt werden.

Diese so ausgewählten Kontakte erhalten automatisch eine Info Email, dass sie nun Teil der selbst eingerichteten Kontaktliste des erfindungsgemäßen Mitteilungssystem sind und daß sie durch Betätigen eines Links direkt mit einem selbst in Kontakt treten können.

Beispielfunktion User Suchfunktion:
In einer derartigen User Suchfunktion-Maske kann man nach Nutzern des erfindungsgemäßen Mitteilungssystems suchen (z.B. über die Pseudos).

Vorteilhaft ist weiterhin ein derartige Vorrichtung, wenn diese Vorrichtung eine Wiedergabevorrichtung zur optischen Widergabe einer örtlichen Umgebung umfasst, wobei diese Vorrichtung auch zum Speichern und zum optischen Widergeben eines Punkts von Interesse (POI) geeignet ist, und wobei auf der wiedergegebenen Darstellung der örtlichen Umgebung, der permanent aktuelle Ort der Vorrichtung, und/oder der permanent aktuelle Ort des Absenders einer bereits empfangenen Sprachnachricht selbst und/oder der Ort eines POI angezeigt werden wobei die Sprachdateien bei Unterschreiten einer definierbaren Distanz der aktuellen Position der Vorrichtung zur Position des Punkts von Interesse automatisiert wiedergebbar sind und die Schalterfunktion auslösen.

Auf diese Weise kann der Ort des Absenders einer Sprachnachricht auf der Wiedergabevorrichtung angezeigt werden. Dies ist entweder möglich, indem er die permanent wiedergegebenen Medieninhalte ersetzt und sich an deren Stelle setzt.

Alternativ können durch die Wiedergabevorrichtung beide zugleich ausgegeben werden und auf die erfindungsgemäße Weise von der Wiedergabe der Sprachnachricht ersetzt bzw. überlagert werden.

Hierbei ist die Vorrichtung zum Speichern und Wiedergeben von mehr als einer Sprachdatei, umfassend eine Aufnahmevorrichtung und/oder eine Wiedergabevorrichtung für Sprachdateien vorzugsweise ein Mobiltelephon bzw. ein Smartphone.

Eine weitere Besonderheit der Vorrichtung ist, daß es mindestens eine Wiedergabevorrichtung zur optischen Widergabe einer örtlichen Umgebung aufweist, wie es beispielsweise durch die Darstellung von Karten mit Hilfe einer Satelitennavigation der Fall ist.

Eine Besonderheit dieses Geräts ist, daß es mindestens einen Speicher zum Speichern von mindestens der Sprachdatei, umfasst und geeignet ist, eine Sprachnotiz in diesen Speicher aufzuzeichnen. Darüber hinaus umfasst es mindestens eine Wiedergabevorrichtung zur akustischen Ausgabe der Sprachdatei und ist hierdurch geeignet, diese aufgezeichnete Sprachdatei auch selbst wiederzugeben.

Indem die Vorrichtung zum Speichern und Wiedergeben von mehr als einer Sprachdatei auch zum Speichern und zum optischen Widergeben eines Punkts von Interesse (POI) auf einer zugleich wiedergegebenen Darstellung seiner örtlichen Umgebung sowie zum Speichern und optischen Widergeben der aktuellen Position der Vorrichtung auf einer zugleich wiedergegebenen Darstellung von dessen örtlicher Umgebung geeignet ist, kann die Vorrichtung zugleich auch den eigenen Standort und seine Umgebung und/oder den Standort eines Punkts von Interesse permanent anzeigen. Diese Punkte von Interesse können entweder werkseitig vorgegeben sein, nachträglich aufspielbar sein, oder in jener Vorrichtung individuell anlegbar sein.

Indem die Sprachdateien bei Unterschreiten einer definierbaren Distanz der aktuellen Position der Vorrichtung zur Position des Punkts von Interesse wiedergebbar sind und die Schaltfunktion auslösen, werden die kontinuierlich empfangenen Medieninhalte bei Unterschreiten der definierbaren Distanz durch die auszuführende Schaltfunktion automatisch wiedergegeben, wenn diese Unterschreitung den erfindungsgemäßen Schalter aktiviert und die Sprachdateien werden in der definierten Sequenz automatisiert wiedergegeben.

Vorzugsweise kann der Bediener der Vorrichtung selbst definieren, in welcher Reihenfolge der die Sprachdateien nach Betätigung des Schalters wiedergegeben bekommen möchte. So kann er definieren, daß entweder zuerst die Sprachdateien von priorisierten Personen/Absendern, oder die ältesten, oder die längsten Sprachdateien etc. wiedergegeben werden etc.

Weiterhin ist definierbar, ob die Sprachdateien bei ihrer Wiedergabe ihrem Erstellort, und/oder den Ort, auf welchen sei sich beziehen, zugleich wiedergeben. So könnte beispielsweise eine Sprachdatei, welche in Berlin am Reichstag von Person A aufgezeichnet wurde und an Person B übermittelt wurde und das Brandenburger Tor betrifft wenn es akustisch wiedergegeben wird, optisch entweder seinen Erstellort (Reichstag), oder seinen Bezusort (Brandenburger Tor) ausgeben. Entsprechend der Vorgaben kann diese Datei wiedergegeben werden, wenn sich die Vorrichtung bis auf eine vordefinierte Distanz zum Erstellort (Reichstag), und/oder seinen Bezusort (Brandenburger Tor) nähert. Der Vorteil einer derartigen Ausgabe ist, daß man mit dieser Funktion individuelle Sprechinhalte zu individuellen Orten erhält.

Weist ein Ort eine Vielzahl von Sprechinhalten auf, wie es beispielsweise für den Reichstag wahrscheinlich st, so kann definiert werden, ob individuelle oder redaktionelle Sprachdateien priorisiert wiedergegeben werden bzw. wie viele Sprachdateien wiedergegeben werden sollen bzw. sie können bereits durch andere Nutzer dieser Funktion bewertet worden sein und dann kann (ergänzend) definiert werden, daß nur Dateien mit einem gewissen Bewertungsniveau ausgegeben werden.

Auf diese Weise können durch Dritte eingegebene und per Fernkommunikationsmittel übermittelte individuelle Inhalte beliebig definierbaren POIs zugeordnet und ausgegeben werden.

Wenn der Absendeort einer jeden Sprachdatei und/oder die Absendeorte mindestens einer Austauschsequenz von hin und her geschickten Sprachdateien auf der Ausgabevorrichtung bildlich vor dem Hintergrund einer geographischen Umgebungskarte ausgegeben wird, dann können die Orte einer ganzen derartigen Kommunikationssquenz angezeigt werden.

Eine solche Vorrichtung, bei welcher die Sprachdateien bei Unterschreiten einer definierbaren Distanz der aktuellen Position zur Position des Punkts von Interesse automatisch wiedergegeben werden und bei welcher die Reihenfolge der Widergabe der mehr als einen Sprachdatei definierbar ist, hat den Vorteil, daß man automatisch bei Unterschreiten einer vordefinierten Distanz die gewünschten Inhalte automatisch vorgespielt bekommt. Vorzugsweise sind diese Inhalte auswählbar. Wählt man beispielsweise aus, nur individuelle Sprachdateien von Freunden empfangen zu wollen, so erhält man bei Unterschreiten einer vordefinierten Distanz zum Bezugsort bzw. Aufnahmeort die Nachricht (z.B. Überraschungsgeburtstagsparty bei Norbert).

Wenn eine solche Vorrichtung eine erste Vorrichtung ist und wenn mindestens eine der Sprachdateien auf einer anderen, weiteren Vorrichtung zum Speichern und Wiedergeben von mehr als einer Sprachdatei aufgezeichnet wurde und per Fernkommunikationsmittel an die erste Vorrichtung übermittelt wurde, so hat dies den Vorteil, daß derartige Mitteilungen nicht wie eine Nachricht auf der Mailbox dort verharren und den Empfänger erst erreichen, wenn dieser die Mailbox abfragt, sondern er erhält die Sprachdatei mit der Nachricht automatisch vorgespielt. Optional, falls er andere Sprachdateien priorisiert hat, kann auch eine Textausgabe erfolgen, welche darauf hinweist, daß eine Sprachdatei zur aktiven Wiedergabe ansteht.

Wenn auf einer jeden der Vorrichtungen Sprachdateien individuell anlegbar sind und auf die jeweils andere Vorrichtung übermittelbar ist und von jener ausgebbar ist, so hat dies den Vorteil, daß ein jeder Besitzer einer derartigen Vorrichtung dem anderen derartige Sprachdateien übermitteln kann und er diese von einem jeden anderen empfangen kann.

Wenn die Sprachdateien unmittelbar / situativ insbesondere durch eine (weitere) solche Vorrichtung selbst erstellbar sind oder automatisch generieribar sind, so hat dies den Vorteil, daß wenn sie unmittelbar / situativ erstellbar sind, diese situativ auch eine andere Person mit Hilfe von Fernkommunikationsmitteln erreichen können. Beispielsweise kann übermittelt werden: "wenn Du an einem Supermarkt vorbeikommst, bring bitte Butter und Käse mit". Wenn sie automatisch generierbar sind, können beispielsweise Inhaber von Supermärkten ihre aktuellen Sonderangebote oder Nachrichtenagenturen ihre aktuellen Schlagzeilen automatisch generieren und diese mit Hilfe von Fernkommunikationsmitteln an Dritte übermitteln. Beispielsweise kann durch eine Nachrichtenagentur übermittelt werden: "Geisterfahrer auf der A1 zwischen der Anschlussstelle ... und der der Anschlussstelle ...".

Wenn die Sprachdateien bei Unterschreiten einer definierbaren Distanz der aktuellen Position zur Position des Punkts von Interesse wiedergebbar sind und wenn die Reihenfolge der Widergabe der mehr als einen Sprachdatei, sowie der sonstigen durch die Vorrichtung wiedergebbaren Dateien von Medieninhalten definierbar ist, so hat dies den Vorteil, daß situativ einstellbar ist, in welcher Konkurrenz / Reihenfolge nach der Betätigung des Schalters derartige Sprachdateien untereinander und in Konkurrenz mit anderen Mitteilungen, wie z.B. Anrufe, SMS stehen, bzw. in welcher Konkurrenz / Reihenfolge derartige Sprachdateien mit der Widergabe von z.B. bildlichen Inhalten, wie Texten, Photos, Filmsequenzen steht. Insbesondere ist die erfindunsggemäße Vorrichtung Teil eines Mitteilungssystem, umfassend eine Sprachdatei, bestehend aus Datenpaketen, welche eine Sprachdatei repräsentieren, eine Aufnahmevorrichtung für Sprachdateien, welche die Sprachdatei in Gestalt von Datenpaketen aufnimmt, die Sprachdatei zur Übermittlung mit Hilfe eines Fernübertragungsnetzwerks aufbereitet und welche mit einem Fernübertragungsnetzwerk verbunden ist, eine Wiedergabevorrichtung für Sprachdateien, welche die über das Fernübertragungsnetzwerk erhaltene Sprachdatei in der Gestalt von Sprache ausgibt und nach der Ausgabe derselben vom Empfänger die Aufnahme einer Antwortsprachdatei einer vergleichbaren Sprachdatei erlaubt und diese Antwortsprachdatei an mindestens den ursprünglichen Sender zurückschickt.

Insbesondere wird die Erfindung in einem derartigen Mitteilungssystem eingesetzt, bei welchem der Benutzer beispielsweise die Software-Anwendungsprogramm des erfindungsgemäßen Mitteilungssystems auf seinem mobilen Gerät installieren und unmittelbar starten kann. Eine separate Registrierung ist in diesem Fall nicht erforderlich. Man kann sofort kommunizieren.

Durch ein integrierte Profilfunktion kann man sich innerhalb des erfindungsgemäßen Mitteilungssystems noch besser präsentieren oder zusätzliche Teilnehmer am erfindungsgemäßen Mitteilungssystem kennen lernen.

Außerhalb des erfindungsgemäßen Mitteilungssystem-Accounts sind beispielsweise bis zu 4 Nutzungsprofile einstellbar (z.B. privat, geschäftlich, Interessensgruppe 1, Interessensgruppe 2), welche optional beispielsweise mit folgenden Angaben versehen werden können:
- Name des Nutzungsprofil oder eine virtuelle Erfindungsgemäßen Mitteilungssystem -Nummer
- Festgelete GPS Position oder die jeweils aktuelle verwenden
- Persönliche erfindungsgemäße Sprachdatei -Bemerkung, eine 10 sekündige Sprachvorstellung der eignen Person
- Subheadline
- Profilbild
- Bildergalerie
- Sichtbarkeit (unsichtbar, für alle, für Freunde, für Geschäftsfreunde)
- Stats:
- Eigenes Geschlecht
- Eigenes Alter
- Eigene Größe
- Eigenes Gewicht
- Eigene Orientierung (heterosexuell, homosexuell, bisexuell)
- Eigene Ethnische Herkunft (Europäer, Inder, Araber, Schwarzafrikaner, Latino, Asiate, mixed)
- Eigene Interessen
- Eigener Familienstatus (single, verpartnert)
- Gesuchtes Geschlecht
- Gesuchter Altersbereich
- Gesuchter Größenbereich
- Gesuchter Gewichtbereich
- Gesuchte Orientierung
- Gesuchte Ethnische Herkunft (Europäer, Inder, Araber, Schwarzafrikaner, Latino, Asiate, mixed)
- Gesuchte Interessen
- Gesuchter Familienstatus (single, verpartnert)
- Zugangsdaten XING
- Zugangsdaten Facebook
- Zugangsdaten TwitterZugangsdaten StudiVZ
- Kontaktnummer für dieses Nutzungsprofil (wird vom System vergeben)
- Einladungsbutton für Freunde
- Löschbutton (um Profil zu löschen)

Erklärung der Funktionen:
Die erfindungsgemäßen Sprachdatei kann Kontakte aus bestehenden Communities (Facebook, XING, LinkedIn, StudiVZ) und Kontakte aus eigen Quellen (iPhone-Kontaktliste) und neuen Kontakten (Community des erfindungsgemäßen Mitteilungssystems) als Zieladressen verwerten und dorthin Nachrichten schreiben.

Dies ist durch das Anlegen von Gruppen im erfindungsgemäß genutzten Aufnahmegerät und einen darin befindlichen Speicher möglich, (z.B. Freunde, Kollegen, Interessenspartner), durch die Einbindung von Personen aus bestehenden Communities (Facebook, XING, LinkedIn, StudiVZ) und Kontakte aus eigen Quellen (iPhone-Telefonbuch) und neuen Kontakten (Community des Mitteilungssystems) zu diesen Gruppen.

Dies ist auch durch Intelligent Groups möglich (zusammengestellt anhand von Merkmalen aus den Nutzerprofilen):
- Auswahl des oder der Adressaten (Einzelperson, Gruppen oder unadressiert)
- Aufnahme des erfindungsgemäße Sprachdatei s (mit Onscreen Countdown)
- Optional Wiedergeben der Aufnahme, Neuaufnahme, Abbruch oder Absenden

Die Funktion 3 des Mitteilungssystems umfasst die
- Bildung von Kommunikationsgruppen (erfindungsgemäße Sprachdatei -Groups), um obenstehende Funktion zu nutzen.
- Auswahl des oder der Adressaten (Einzelperson, Gruppen oder unadressiert)
- Aufnahme der erfindungsgemäßen Sprachdatei (mit Onscreen Countdown)
- Optional Wiedergeben der Aufnahme, Neuaufnahme, Abbruch oder Absenden der Konferenzeinladung
- Alle akzeptierenden Teilnehmer hören die erfindungsgemäße Sprachdatei , wenn diese antworten, hören das jeweils alle Teilnehmer
- Bildung von Kommunikationsgruppen (erfindungsgemäße Sprachdatei -Rooms), um obenstehende Funktion zu nutzen.
- Auswahl des oder der Adressaten (Einzelperson, Gruppen oder unadressiert)
- Aufnahme des erfindungsgemäße Sprachdatei s (mit Onscreen Countdown)
- Optional Wiedergeben der Aufnahme, Neuaufnahme, Abbruch oder Absenden der Konferenzeinladung
- Alle akzeptierenden Teilnehmer werden über eine Konferenzplattform miteinander verbunden (z.B. durch ein Softwareanwendungsprogramm des Erfindungssystems wird geschlossen und es öffnet sich automatisch die Kommunikation, z.B. in Gestalt eines Softwareanwendungsprogramms des iPhones, welche eine vordefinierte Nummer anwählt)
- Innerhalb der Konferenz kann mittels DTMF-Tönen gesteuert werden.

Die Funktion 3 des Mitteilungssystems umfasst die Visualisierung des eigenen Aufenthaltsorts und Status und Kontakte innerhalb des erfindungsgemäßen Mitteilungssystems auf einer Landkarte.

Funktionsweise:
- Auf einer Google-Maps ähnelnden Karte werden erfindungsgemäße Sprachdateien im definierbaren Umkreis angezeigt.
- Man sieht den Onlinestatus der kommunizierenden Person (beschäftigt, kommunikationswillig usw.) und deren letzte erfindungsgemäße Sprachdatei.
- Man kann Personen direkt über Antippen auf der Oberfläche einer erfindungsgemäßen Sprachdatei auswählen und so mit ihm auch anderweitig in Kontakt treten, ihn z.B. anrufen.
- Personen, die gerade miteinander kommunizieren (Sprachdateien-Raum), sind mit einer Linie verbunden, die den Status des Gespräches zeigt (Privatgespräch oder Gespräch, bei dem Freunde willkommen sind)
- Durch Antippen der Linie wird man direkt in den erfindungsgemäße Sprachdateien-Raum verbunden

Die Funktion 4 des Mitteilungssystems umfasst die Kommmunikationsmöglichkeit des "Call Through".
- Man kann eine Person, mit welcher man auf die erfindungsgemäße Weise Sprachdateien ausgetauscht hat in Folge anrufen.
- Das erfindungsgemäße Mitteilungssystem initiiert dann ein Gespräch zur VoIP-Plattform (das Softwareanwendungsprogramm des erfindungsgemäße Mitteilungssystem auf der Eingabevorrichtung wird geschlossen und es öffnet sich automatisch die Kommunikationszenrale z.B. als Softwareanwendungsprogramm des iPhones, welche eine vordefinierte Nummer anwählt).
- Die Plattform / der Server verbindet mit dem angewählten Telefonanschluss.
- Die Berechnung erfolgt beispielsweise über ein Prepaid-Guthaben, welches zuvor aufgeladen werden muss (ähnlich der z.B. Softwareanwendungsprogramm Truphone).

Weiterhin können Abläufe eines erfindungsgemäßen Austauschs von Sprachdateien aufgezeichnet werden und an die Teilnehmer dann zugeschickt, z.B. "zugemailt" werden, was zur Bestätigung von Verträgen beispielsweise hilfreich ist.

Erfindungsgemäßen Mitteilungssystem ist ein Voice-Chat mit Multi-Dialog-Funktion
- Präsenzfunktion
- Shout und Answer

Anbindung von anderen Systemen: Facebook, Email, Xing

Meldet sch ein Teilnehmer an, kann er sich dann an den anderen Profilen anmelden.

Damit ist es möglich, ein Voice-Shout an andere Plattformen rauszusenden. Diese können ggf. über ein PC- Softwareanwendungsprogramm ebenfalls antworten.

## Patentansprüche

1. Vorrichtung zum Speichern und Wiedergeben von mehr als einer Sprachdatei, umfassend:
mindestens ein Modul, mit dessen Hilfe Medieninhalte kontinuierlich empfangenden werden können, sowie mindestens eine Wiedergabevorrichtung zur Wiedergabe von diesen kontinuierlich empfangenen Medieninhalten mindestens ein Modul, mit dessen Hilfe per Fernkommunikation übermittelte Sprachdateien empfangenden werden können,
sowie mindestens einen Speicher zum Speichern von mindestens der Sprachdatei, sowie mindestens eine Wiedergabevorrichtung zur akustischen Ausgabe der mindestens einen Sprachdatei und mindestens einen Schalter, mit dessen Betätigung die Wiedergabe der kontinuierlich empfangenen Medieninhalte zu Gunsten von mindestens einer der gespeicherten oder Sprachdateien verringert oder unterbrochen werden kann.

2. Vorrichtung zum Speichern und Wiedergeben von mehr als einer Sprachdatei, nach Anspruch 1, wobei die kontinuierlich empfangenen Medieninhalte Toninhalte und/oder Bildinhalte sind.

3. Vorrichtung zum Speichern und Wiedergeben von mehr als einer Sprachdatei, nach einem der zuvor genannten Ansprüche, wobei die kontinuierlich empfangenen Medieninhalte mit Hilfe von Fernkommunikationsmitteln von einem Medieninhalteversender zur Vorrichtung übermittelt werden und von der Vorrichtung empfangen und ausgegeben werden können.

4. Vorrichtung zum Speichern und Wiedergeben von mehr als einer Sprachdatei, nach einem der zuvor genannten Ansprüche, wobei die Sprachdatei mit Hilfe von Fernkommunikationsmitteln zur Vorrichtung übermittelt werden und von der Vorrichtung empfangen und ausgegeben werden können.

5. Vorrichtung zum Speichern und Wiedergeben von mehr als einer Sprachdatei nach einem der zuvor genannten Ansprüche, wobei die Sprachdateien den Inhalt einer Börsenmitteilung, oder eines redaktionellen Nachrichteninhalts, oder eines individuellen Mitteilungsinhalts, oder einer werkseitig vordefinierten Beschreibung eines POI, oder von Wetterdaten, oder von Inhalten des Adressbuchs, oder von Inhalten angefertigter Notizen, oder von Inhalten von Voice-Feeds, oder von Inhalten von Voicemails, oder von Inhalten von Nachrichten repräsentieren.

6. Vorrichtung zum Speichern und Wiedergeben von mehr als einer Sprachdatei nach einem der zuvor genannten Ansprüche, umfassend in der Aufnahmevorrichtung und/oder in der Wiedergabevorrichtung einen Datenspeicher, in welchen pro Zielperson mindestens einen Namen (Alias) und pro Name mindestens eine Adresse von potentiellen Empfängern einer erfindungsgemäßen Sprachdatei eingebbar ist.

7. Vorrichtung zum Speichern und Wiedergeben von mehr als einer Sprachdatei nach einem der zuvor genannten Ansprüche, wobei die Adressen von Empfängern im Datenspeicher zu Adressgruppen zusammengeschlossen werden können.

8. Vorrichtung nach einem der zuvor genannten Ansprüche, wobei eine Sprachdatei durch eine Antwortsprachdatei erwiederbar ist und per Fernkommunikationsmittel als Antwortspardatei an den ursprünglichen Versender der Sprachdatei übermittelbar ist.

9. Vorrichtung nach einem der zuvor genannten Ansprüche, wobei die Antwortsprachdatei an alle Personen aus der Adressgruppe gesandt wird, in welcher sich auch der ursprünglichen Versender befindet.

10. Vorrichtung nach einem der zuvor genannten Ansprüche, wobei mindestens eine Sprachdatei zusätzlich in die Gestalt eines Textes übertragen wird und als Textnachricht ausgebbar und / oder als Textnachricht übermittelbar ist.

11. Vorrichtung nach einem der zuvor genannten Ansprüche, wobei die Sprachdateien in eine Sprachdateigestalt transformierten Schreibtexte, Überschriften und/oder Zusammenfassungen von Zeitungs- und/oder Zeitschriftenartikeln repräsentieren.

12. Vorrichtung nach einem der zuvor genannten Ansprüche, wobei die Sprachdatei Teil einer Bildnachricht und/oder Videonachricht ist.

13. Vorrichtung nach einem der zuvor genannten Ansprüche, wobei die Sprachdatei eine Sprechdauer von bis zu zwei Minuten umfasst.

14. Vorrichtung nach einem der zuvor genannten Ansprüche, wobei die Sprachdatei eine Dateigröße von bis zu einem MB umfasst.

15. Vorrichtung nach einem der zuvor genannten Ansprüche, umfassend einen Server, welcher auf Anfrage den Teilnehmern den Zutritt an eine Konferenzfunktion bereitstellt.

16. Vorrichtung zum Speichern und Wiedergeben von mehr als einer Sprachdatei nach einem der zuvor genannten Ansprüche, eine Wiedergabevorrichtung zur optischen Widergabe einer örtlichen Umgebung umfasst, wobei diese Vorrichtung auch zum Speichern und zum optischen Widergeben eines Punkts von Interesse (POI) geeignet ist, und wobei auf der wiedergegebenen Darstellung der örtlichen Umgebung, der permanent aktuelle Ort der Vorrichtung, und/oder der permanent aktuelle Ort des Absenders einer bereits empfangenen Sprachnachricht selbst und/oder der Ort eines POI angezeigt werden wobei die Sprachdateien bei Unterschreiten einer definierbaren Distanz der aktuellen Position der Vorrichtung zur Position des Punkts von Interesse automatisiert wiedergebbar sind und die Schalterfunktion auslösen.

17. Vorrichtung zum Speichern und Wiedergeben von mehr als einer Sprachdatei nach einem der zuvor genannten Ansprüche, wobei die Vorrichtung eine erste Vorrichtung ist und wobei mindestens eine der Sprachdateien auf einer anderen, weiteren Vorrichtung zum Speichern und Wiedergeben von mehr als einer Sprachdatei aufgezeichnet wurde und per Fernkommunikationsmittel an die erste Vorrichtung übermittelt wurde.

18. Vorrichtung zum Speichern und Wiedergeben von mehr als einer Sprachdatei nach einem der zuvor genannten Ansprüche, wobei auf einer jeden der Vorrichtungen Sprachdateien individuell anlegbar sind und auf die jeweils andere Vorrichtung übermittelbar ist und von jener ausgebbar ist.

19. Vorrichtung zum Speichern und Wiedergeben von mehr als einer Sprachdatei nach einem der zuvor genannten Ansprüche, wobei die Sprachdateien unmittelbar erstellbar sind oder automatisch generieribar sind.

20. Vorrichtung zum Speichern und Wiedergeben von mehr als einer Sprachdatei nach einem der zuvor genannten Ansprüche, wobei die Sprachdateien bei Unterschreiten einer definierbaren Distanz der aktuellen Position zur Position des Punkts von Interesse wiedergebbar sind werden und wobei die Reihenfolge der Widergabe der mehr als einen Sprachdatei, sowie der sonstigen durch die Vorrichtung wiedergebbaren Dateien von Medieninhalten definierbar ist.
